# EUROPÄISCHE PATENTSCHRIFT

(11) **EP 1 264 145 B1**
(45) Veröffentlichungstag und Bekanntmachung des Hinweises auf die Patenterteilung: **24.11.2004**
(21) Anmeldenummer: 01913741.3
(22) Anmeldetag: 12.03.2001
(51) Int. Cl.: F24D 3/08, F24D 10/00, F24D 19/10

(54) **VORRICHTUNG ZUM ANSCHLIESSEN EINES WÄRMETAUSCHERS EINER WARMWASSERENTNAHMEEINRICHTUNG EINER WOHNUNG AN EIN FERNWÄRMENETZ**
DEVICE FOR CONNECTING A HEAT EXCHANGER IN A DOMESTIC DEVICE FOR DRAWING OFF HOT WATER TO A LONG-DISTANCE ENERGY NETWORK
DISPOSITIF DESTINE A RACCORDER UN ECHANGEUR DE CHALEUR D'UN DISPOSITIF DOMESTIQUE DE PRELEVEMENT D'EAU CHAUDE A UN RESEAU DE DISTRIBUTION DE CHALEUR

(30) Priorität: 14.03.2000 DE 10012069
(43) Veröffentlichungstag der Anmeldung: 11.12.2002
(73) Patentinhaber: Danfoss A/S, 6430 Nordborg (DK)
(72) Erfinder: MOLBAEK, Jens, Jorgen, DK-6430 Nordborg (DK); SKETA, Tomaz, 1230 Domzale (SI)
(86) Internationale Anmeldenummer: PCT/DK2001/000165
(87) Internationale Veröffentlichungsnummer: WO 2001/069138

(56) Entgegenhaltungen:
- DE-A1- 3 814 052
- DE-A1- 4 333 270
- DE-A1- 19 621 247
- GB-A- 1 149 806

## Beschreibung

Die Erfindung bezieht sich auf eine Vorrichtung zum Anschließen eines Wärmetauschers für eine Warmwasserentnahmeeinrichtung in einer Wohnung und gegebenenfalls einer Heizkörpereinrichtung in der Wohnung an ein Fernwärmenetz, mit einem in Abhängigkeit vom Mengendurchfluß der Warmwasserentnahmeeinrichtung gesteuerten ersten Ventil und einem von der Temperatur des entnommenen Warmwassers gesteuerten zweiten Ventil, die beide zwischen dem Fernwärmenetz und der Primärseite des Wärmetauschers angeordnet sind, dessen Sekundärseite mit der Warmwasserentnahmeeinrichtung verbunden ist.

Bei einer bekannten Vorrichtung dieser Art (DE 199 07 509 A1) liegen das erste Ventil und das zweite Ventil in Reihe. Das erste Ventil wird in Abhängigkeit von einem Druckabfall an einer in der Kaltwasserzuleitung auf der Sekundärseite des Wärmetauschers angeordneten Drossel gesteuert. Das zweite Ventil wird durch einen Temperaturfühler gesteuert, der die Temperatur des Warmwassers auf der Sekundärseite des Wärmetauschers mißt. Hierbei soll eine möglichst genaue Regelung der Temperatur des entnommenen Warmwassers bei variabler Durchflußmenge, Temperatur und Druckdifferenz im Primärkreis erreicht werden und bei variabler Kaltwassertemperatur im Sekundärkreis des Wärmetauschers die Temperatur des über die Entnahmeeinrichtung entnommenen Warmwassers bei gegebener Entnahmemenge möglichst konstant gehalten werden. Ferner soll der primärseitige Mengendurchfluß im Wärmetauscher auf den augenblicklichen sekundärseitigen Mengendurchfluß des Wärmetauschers abgestimmt sein.

Im bekannten Fall ergibt die Regelung des Mengendurchflusses auf der Primärseite des Wärmetauschers bei gegebener Entnahmemenge auf der Sekundärseite des Wärmetauschers den richtigen Mengendurchfluß bei gegebener Vorlauftemperatur auf der Primärseite von beispielsweise 70°C und vollständig geöffnetem temperaturabhängig gesteuertem zweiten Ventil. Wenn die Vorlauftemperatur ansteigt, hat das in Abhängigkeit vom Mengendurchfluß auf der Primärseite gesteuerte erste Ventil weiterhin denselben Öffnungsgrad, während bei dem temperaturabhängig gesteuerten zweiten Ventil der kᵥ-Wert verringert wird, damit der primärseitige Durchfluß wieder der zur Aufrechterhaltung der sekundärseitigen Temperatur durch den Wärmetauscher zu übertragenden Wärmemenge entspricht. Bei maximaler Vorlauftemperatur auf der Primärseite des Wärmetauschers ist mithin der Öffnungsgrad des temperaturabhängig gesteuerten zweiten Ventils klein.

Da ferner das Quadrat des gesamten reziproken kᵥ-Werts der beiden in Reihe geschalteten Ventile gleich der Summe der Quadrate der reziproken kᵥ-Werte der beiden Ventile ist, macht der kᵥ-Wert des temperaturabhängig gesteuerten Ventils einen großen Teil des gesamten kᵥ-Werts aus, so daß der P-Bereich (Proportionalbereich) des temperaturabhängig gesteuerten Ventils breit sein muß, um eine stabile (schwingungsfreie) Regelung der Temperatur des Warmwassers auf der Sekundärseite des Wärmetauschers bei kleinen Entnahmemengen zu erreichen.

Der Erfindung liegt die Aufgabe zugrunde, eine Vorrichtung der eingangs genannten Art anzugeben, bei der die Kapazität des Fernwärmenetzes besser ausgenutzt und eine genaue und stabile Regelung der Temperatur des entnommenen Warmwassers auf einfache Weise möglich ist.

Erfindungsgemäß ist diese Aufgabe dadurch gelöst, daß das erste Ventil und das zweite Ventil parallelgeschaltet sind. Auf diese Weise wird eine proportionale Steuerung der beiden Ventile in Abhängigkeit von der Entnahmemenge erreicht. Die Parallelschaltung der beiden Ventile hat den Vorteil, daß bei kleinen Entnahmemengen Schwingungen der Temperatur des entnommenen Warmwasser vermieden werden. Ferner entspricht bei parallelgeschalteten Ventilen der gesamte kᵥ-Wert der Summe der kᵥ-Wert jedes einzelnen Ventils. Der kᵥ-Wert des temperaturabhängig gesteuerten Ventils macht daher nur einen kleineren Teil des gesamten kᵥ-Werts aus, so daß eine stabile Temperaturregelung mit kleinerem Proportionalbereich im Vergleich zu in Reihe geschalteten Ventilen möglich ist.

Wenn vorausgesetzt wird, daß der gesamte kᵥ-Wert bei der Parallelschaltung der gleiche wie bei der Reihenschaltung der beiden Ventile ist, um die gleiche Wärmemenge zu übertragen, dann muß der Proportionalbereich der in Reihe geschalteten Ventile mehr als das Zweifache des Proportionalbereichs der parallelgeschalteten Ventile aufweisen. Mit parallelgeschalteten Ventilen kann daher eine genauere Temperaturregelung auf einfachere Weise erreicht werden, wenn die gleiche Stabilität wie bei in Reihe geschalteten Ventilen vorausgesetzt wird.

Die Anwendung eines in Abhängigkeit von dem Mengendurchfluß der Entnahmeeinrichtung steuerbaren ersten Ventils hat den Vorteil, daß der primärseitige Durchfluß rasch auf die augenblickliche Warmwasserentnahmemenge einstellbar ist.

Bei in Reihe geschalteten Ventilen kann ein Ventil allein nicht den Gesamtdurchfluß über den Grenzwert hinaus erhöhen, der durch das kleinste Ventil bestimmt ist. Wenn daher die Warmwasserentnahme beendet wird, sperrt das in Abhängigkeit vom Mengendurchfluß der Warmwasserentnahmeeinrichtung gesteuerte erste Ventil den primärseitigen Durchfluß. Das temperaturabhängig gesteuerte zweite Ventil ist dann wirkungslos.

Bei parallelgeschalteten Ventilen ist der primärseitige Gesamtdurchfluß gleich der Summe der Durchflüsse durch die beiden Ventile. Wenn daher die Warmwasserentnahme beendet wird, wird das in Abhängigkeit vom Mengendurchfluß gesteuerte erste Ventil gesperrt, so daß der Gesamtdurchfluß verringert wird. Das temperaturabhängig gesteuerte Ventil bleibt weiterhin in Betrieb und so eingestellt, daß seine Fühlertemperatur der gewünschten Entnahmetemperatur entspricht. Der Wärmetauscher und sein Primärkreis werden warm gehalten, so daß beim Öffnen der Entnahmeeinrichtung sofort warmes Wasser fließt.

Vorzugsweise ist dafür gesorgt, daß bei Vorhandensein einer Heizkörpereinrichtung das erste Ventil ein Prioritätsventil ist, über das die Heizkörpereinrichtung auch mit dem Fernwärmenetz verbunden ist und das bei einer Entnahme von Warmwasser den Durchfluß von Warmwasser zur Heizkörpereinrichtung drosselt oder sperrt.

Das Prioritätsventil ist vorzugsweise ein Dreiwegeventil, das durch eine Membran in Abhängigkeit vom Mengendurchfluß der Entnahmeeinrichtung steuerbar ist. Bei Entnahme von Warmwasser nimmt der Druck auf der einen Seite der Membran ab. Die Zufuhr von Warmwasser aus dem Fernwärmenetz in die Heizkörpereinrichtung wird dabei gedrosselt oder gesperrt, so daß die Kapazität des Fernwärmenetzes zur Lieferung von Warmwasser auf der Entnahmeseite besser ausgenutzt wird.

Das Verschlußstück des ersten Ventils kann mit einem Stellantrieb verbunden sein, der bei einem Druckabfall in einer Sekundärleitung des Wärmetauschers eine Verstellung des Verschlußstücks bewirkt.

Zweckmäßigerweise ist das Verschlußstück des ersten Ventils mit der einen Seite der Membran in einem Gehäuseteil und die andere Seite der Membran mit einer Sekundärleitung des Wärmetauschers verbunden. Bei der Entnahme von Warmwasser nimmt dann der Druck gegen die dem Prioritätsventil zugewandte Seite der Membran ab, so daß die Verbindung zur Heizkörpereinrichtung gedrosselt und der Durchfluß auf der Primärseite des Wärmetauschers gesteigert wird.

Vorzugsweise ist die Sekundärleitung die Kaltwasserleitung des Wärmetauschers und die Membran mit dem Verschluß eines in der Kaltwasserzuleitung liegenden dritten Ventils verbunden. Dadurch erhöht sich die Lebensdauer der Membran. Funktionsmäßig kann die Membran auch auf der Warmwasserseite angeordnet sein.

Vorzugsweise weisen alle Ventile ein gemeinsames Gehäuse auf. Dies ergibt einen sehr kompakten Aufbau der Vorrichtung ohne längere Kanäle und interne Verbindungen. Dementsprechend ist der Montageaufwand im Vergleich zu der Verbindung einzelner Bauteile über mehrere Leitungen geringer.

Im einzelnen kann die Vorrichtung so aufgebaut sein, daß das erste Ventil einen langgestreckten zylindrischen Gehäuseteil aufweist, in dem das Verschlußstück des ersten Ventils in Längsrichtung verstellbar ist und an dessen einem Ende der Gehäuseteil des Stellantriebs so angebracht ist, daß die Membran koaxial zur Längsachse des Gehäuseteils des ersten Ventils angeordnet ist, daß der Gehäuseteil des Stellantriebs zugleich den Gehäuseteil des dritten Ventils bildet, daß quer zum Gehäuseteil des ersten Ventils der Gehäuseteil des zweiten Ventils mit einem daran angebrachten Temperaturregler zur Betätigung des zweiten Ventils angebracht ist und der Temperaturfühler des Temperaturreglers in thermischer Verbindung mit dem Warmwasserausgang des Wärmetauschers steht, und daß das zweite Ventil den Eingang des ersten Ventils und dessen mit dem Wärmetauscher verbundenen Ausgang überbrückt.

Zusätzlich kann an und quer zu den Gehäuseteilen des ersten Ventils und des zweiten Ventils ein Gehäuseteil eines vierten Ventils angebracht sein, das auf der mit dem Eingangsdruck verbundenen Eingangsseite des ersten und zweiten Ventils liegt und in Abhängigkeit von einer Druckdifferenz zwischen dem Eingangsdruck und der Ausgangsseite des ersten und zweiten Ventils steuerbar ist.

Hierbei kann mit dem Gehäuseteil des vierten Teils ein Gehäuseteil eines Differenzdruckfühlers verbunden sein, der eine mit dem Verschlußstück des vierten Ventils verbundene Membran aufweist, die auf der einen Seite dem Eingangsdruck und auf der anderen Seite dem Ausgangsdruck des ersten und zweiten Ventils ausgesetzt ist.

Die Erfindung wird im folgenden anhand eines bevorzugten Ausführungsbeispiels in Verbindung mit der Zeichnung näher beschrieben. Hierin zeigen:
- Fig. 1: ein schematisches Schaltbild eines Ausführungsbeispiels einer erfindungsgemäßen Vorrichtung, die ein Fernwärmenetz und ein Kaltwassernetz mit einem Wärmetauscher einer Warmwasserentnahmeeinrichtung und einer Heizkörpereinrichtung verbindet,
- Fig. 2: eine Seitenansicht des Aufbaus der erfindungsgemäßen Vorrichtung nach Fig. 1,
- Fig. 3: den Schnitt III-III der Fig. 2,
- Fig. 4: den Schnitt IV-IV der Fig. 2 und
- Fig. 5: den Schnitt V-V der Fig. 4.

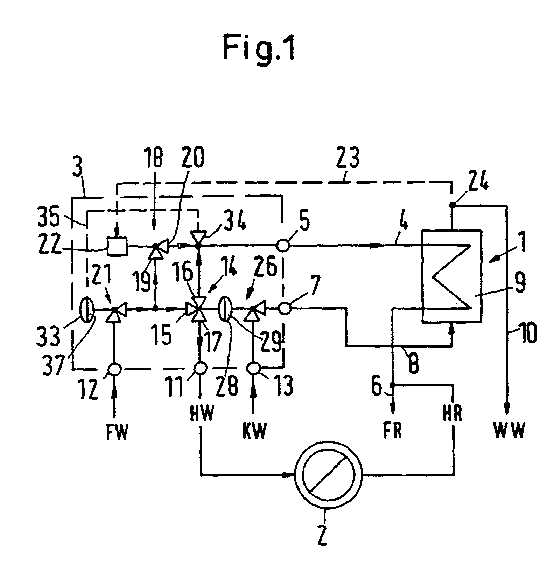

Nach Fig. 1 sind ein Wärmetauscher 1 und eine Heizkörpereinrichtung 2 bestehend aus einem oder mehreren Heizkörpern, über die erfindungsgemäße Vorrichtung 3 an ein Fernwärmenetz FW und ein Kaltwassernetz KW angeschließbar. Der Wärmetauscher 1 und die Heizkörpereinrichtung 2 befinden sich in der Wohnung eines Hauses.

Die Primärseite des Wärmetauschers 1 wird über eine Zuleitung 4 für das warme Wasser aus dem Fernwärmenetz FW mit einem Ausgangsanschluß 5 der Vorrichtung 3 verbunden. Der Ausgang der Primärseite des Wärmetauschers 1 ist über eine Rückleitung 6 mit der Rückleitung FR des Fernwärmenetzes verbunden. Der Warmwasserausgang der Sekundärseite 9 des Wärmetauschers 1 ist über eine Leitung 10 mit einer Warmwasserentnahmeeinrichtung WW, bestehend aus einem oder mehreren Warmwasserventilen, verbunden.

Ein dritter Ausgangsanschluß 11 für Heizwasser HW wird mit der Eingangsseite der Heizkörpereinrichtung 2 verbunden, deren Rückleitung HR ebenfalls mit der Leitung 6 verbunden ist.

Die Vorrichtung 3 hat eingangsseitig einen Eingangsanschluß 12 für das Fernwärmenetz FW und einen Eingangsanschluß 13 für den Anschluß des Kaltwassernetzes KW.

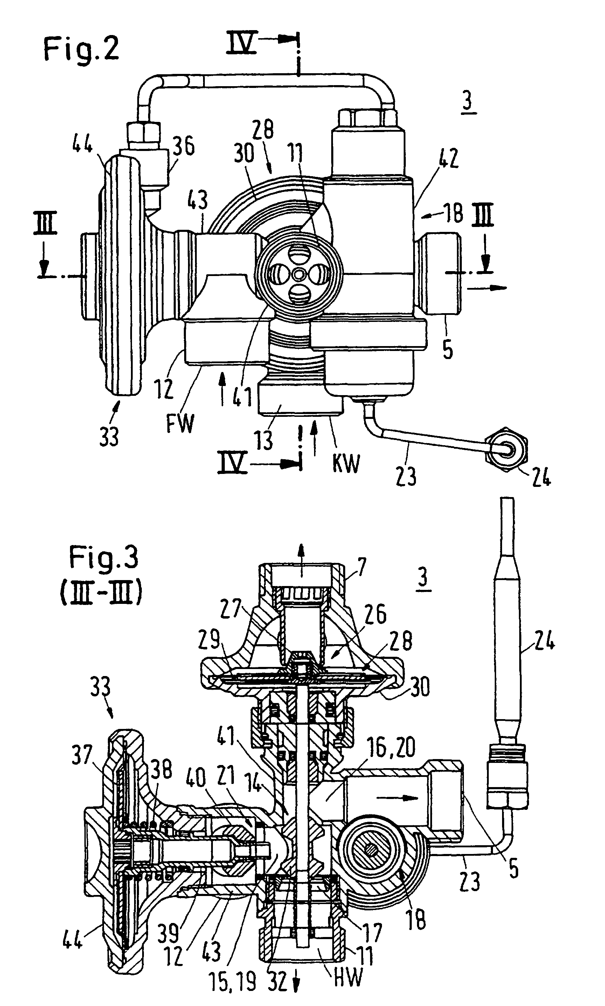

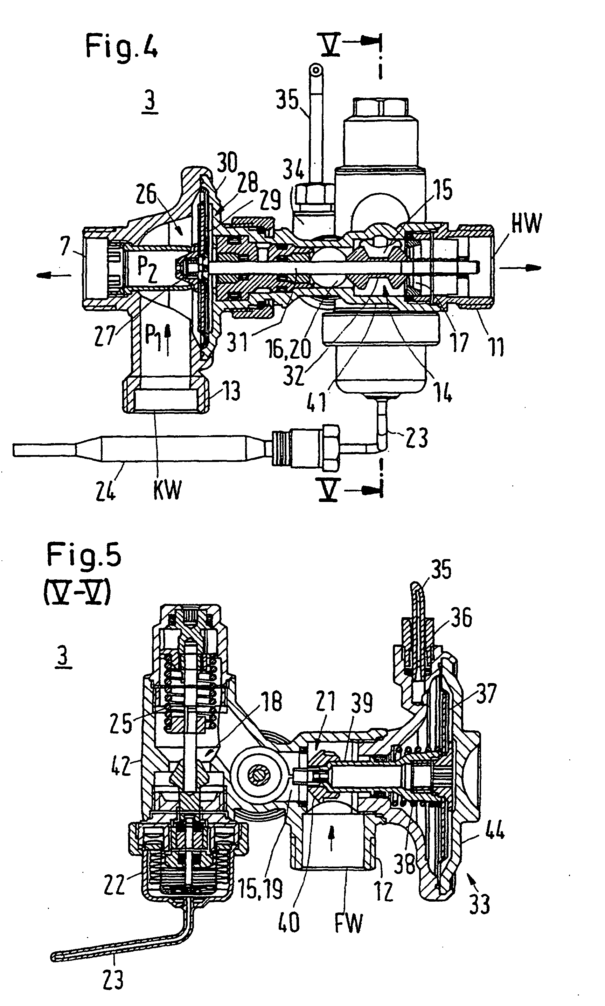

Die Vorrichtung 3 enthält - vergleiche auch Fig. 2 bis Fig. 5 - ein erstes Ventil, hier ein Prioritätsventil 14 in Form eines Dreiwegeventils, mit einem Eingang 15 und zwei Ausgängen 16 und 17. Parallel zum Eingang 15 und zum Ausgang 16 des Prioritätsventils 14 liegt ein zweites Ventil 18 mit einem Eingang 19 und einem Ausgang 20. Der Ausgang 17 des Prioritätsventils 14 ist mit dem Ausgangsanschluß 11 verbunden. Die Eingänge 15 und 19 der Ventile 14 und 18 sind über ein Ventil 21 mit dem Eingangsanschluß 12 verbunden. Die Ausgänge 16 und 20 der Ventile 14 und 18 sind miteinander und mit dem Ausgangsanschluß 5 verbunden. Ferner enthält die Vorrichtung 3 einen Temperaturregler 22. Dieser ist über eine Leitung 23 mit einem Temperaturfühler 24 verbunden, der einen Dehnstoff aufweist und die Temperatur des entnommenen Warmwassers am sekundärseitigen Ausgang des Wärmetauschers 1 mißt und in Abhängigkeit von dem Maß der Dehnung des Dehnstoffs das Ventil 18 bzw. dessen Verschlußstück gegen die Kraft einer einstellbaren Sollwertfeder 25 (Fig. 5) so steuert bzw. einstellt, daß der Mengendurchfluß des warmen Wassers aus dem Fernwärmenetz FW durch das Ventil 18 so eingestellt wird, daß die Temperatur am Ausgang des Wärmetauschers 1 unabhängig von der Entnahmemenge durch die Warmwasserentnahmeeinrichtung WW weitgehend konstant, d.h. gleich dem eingestellten Sollwert, bleibt.

Ferner enthält die Vorrichtung 3 zwischen dem Eingangsanschluß 13, der mit dem Kaltwassernetz KW verbunden wird, und dem Ausgangsanschluß 7 ein weiteres Ventil 26, dessen Ventilverschlußstück 27 mit einem Stellantrieb 28 verbunden ist, der bei einem Druckabfall in der Sekundärleitung des Wärmetauschers 1, hier der Kaltwasserzuleitung 8, eine Verstellung des Ventilverschlußstücks 27 bewirkt. Der Stellantrieb 28 enthält eine Membran 29 in einem Gehäuseteil 30, die auf der einen Seite mit dem Ventilverschlußstück 27 des Ventils 26 und auf der anderen Seite über eine Ventilstange 31 mit dem Ventilverschlußstück 32 des Prioritätsventils 14 verbunden ist. Von der einen zur anderen Seite der Membran 29 verläuft ein Durchgang durch das Ventilverschlußstück 27 und die Membran 29.

Bei maximaler Entnahme von Warmwasser durch die Warmwasserentnahmeeinrichtung WW fällt der Druck P₂ (vgl. Fig. 4) auf der Ausgangsseite des Ventils 26 gegenüber dem Druck P₁ des kalten Wassers auf der Eingangsseite des Ventils 26 stark ab, so daß der Stellantrieb 28 den Durchgang vom zentralen Eingang 15 des Prioritätsventils 14 zum Ausgang 17, der über den Ausgangsanschluß 11 mit der Heizkörpereinrichtung 2 verbunden ist, sperrt und den Durchgang vom zentralen Eingang 15 zum Ausgang 16, der mit der Primärseite des Wärmetauschers 1 über den Ausgangsanschluß 5 und die Zuleitung 4 verbunden ist, vollständig öffnet. Dadurch fließt die maximale Warmwassermenge bei vollständig geöffnetem Ventil 21 über das Prioritätsventil 14 zum Wärmetauscher 1. Wenn die Entnahme von Warmwasser über den Wärmetauscher 1 jedoch beendet (gesperrt) wird, schaltet das Ventil 26 über den Stellantrieb 28 das Prioritätsventil 14 in die andere Endstellung um, in der der Ausgang 16 gesperrt und der Ausgang 17 vollständig geöffnet ist, so daß die maximale Warmwassermenge aus dem Fernwärmenetz FW über das geöffnete Ventil 21 und das Prioritätsventil 14 zur Heizkörpereinrichtung 2 strömen kann. Bei einem Zwischenwert der Warmwasserentnahme über die Warmwasserentnahmeeinrichtung WW nimmt das Verschlußstück 32 des Prioritätsventils 14 dagegen eine Zwischenstellung ein, in der die Zuführung von warmem Wasser aus dem Fernwärmenetz FW über das Prioritätsventil 14 entsprechend auf den Wärmetauscher 1 und die Heizkörpereinrichtung 2 verteilt wird.

Das Ventil 21 wird durch einen Differenzdruckregler 33 gesteuert. Der Differenzdruckregler 33 mißt den Druckabfall zwischen dem gemeinsamen Verbindungspunkt der Eingänge 15 und 19 einerseits und dem gemeinsamen Verbindungspunkt der Ausgänge 16 und 20 der beiden Ventile 14 und 18 andererseits zum einen über das Ventil 21 und zum anderen über einen Druckfühler 34, der über eine Leitung 35 und einen Eingangsanschluß 36 mit der einen Seite einer in dem Differenzdruckregler 33 angeordneten Membran 37 in Verbindung steht. Die gleiche Seite der Membran 37 ist durch eine Druckfeder 38 belastet und steht über eine hohle Ventilstange 39 mit dem Ventilverschlußstück 40 des Ventils 21 in Verbindung. Die Eingänge 15, 19 der Ventile 14, 18 stehen über die durch das Ventilverschlußstück 40 hindurchgeführte hohle Ventilstange 39 mit der anderen Seite der Membran 37 in Verbindung. Durch den Differenzdruckregler 33 wird der eingangsseitige Druck der Parallelschaltung der beiden Ventile 14, 18 mit dem ausgangsseitigen Druck der Parallelschaltung verglichen und das Ventil 21 bzw. dessen Ventilverschlußstück 40 gegen die Kraft der als Sollwertgeber wirkenden Feder 38 so gesteuert, daß der Druckabfall an der Parallelschaltung der Ventile 14, 18 unabhängig von einer Schwankung des der Vorrichtung 3 zugeführten Drucks des Warmwassernetzes FW konstant bleibt.

Die Vorrichtung 3 hat einen sehr kompakten Aufbau, da alle Ventile ein gemeinsames Gehäuse aufweisen. So hat das Prioritätsventil 14 einen langgestreckten zylindrischen Gehäuseteil 41, in dem das Verschlußstück 32 in Längsrichtung verstellbar ist und an dessen einem Ende der Gehäuseteil 30 des Stellantriebs 28 angebracht ist. Die Membran 29 des Stellantriebs 28 ist koaxial zur Längsachse des Gehäuseteils 41 angeordnet. Der Gehäuseteil 30 des Stellantriebs 28 bildet zugleich den Gehäuseteil des Ventils 26. Quer zum Gehäuseteil 41 des Prioritätsventils 14 ist der Gehäuseteil 42 des Ventils 18 angebracht, wobei an dem Gehäuseteil 42 zugleich der Temperaturregler 22 koaxial zur Betätigung des Ventils 18 angebracht ist. An und quer zu den Gehäuseteilen 41, 42 der beiden Ventile 14 und 18 ist ein Gehäuseteil 43 des Ventils 21 angebracht. Mit dem Gehäuseteil 43 des Ventils 21 ist ferner ein Gehäuseteil 44 des Differenzdruckreglers 33 verbunden.

## Patentansprüche

1. Vorrichtung (3) zum Anschließen eines Wärmetauschers (1) für eine Warmwasserentnahmeeinrichtung (WW) in einer Wohnung und gegebenenfalls einer Heizkörpereinrichtung (2) in der Wohnung an ein Fernwärmenetz (FW), mit einem in Abhängigkeit vom Mengendurchfluß der Warmwasserentnahmeeinrichtung (WW) gesteuerten ersten Ventil (14) und einem von der Temperatur des entnommenen Warmwassers gesteuerten zweiten Ventil (18), die beide zwischen dem Fernwärmenetz (FW) und der Primärseite des Wärmetauschers (1) angeordnet sind, dessen Sekundärseite (9) mit der Warmwasserentnahmeeinrichtung verbunden ist, **dadurch gekennzeichnet, daß** das erste Ventil (14) und das zweite Ventil (18) parallelgeschaltet sind.

2. Vorrichtung nach Anspruch 1, **dadurch gekennzeichnet, daß** bei Vorhandensein einer Heizkörpereinrichtung (2) das erste Ventil (14) ein Prioritätsventil ist, über das die Heizkörpereinrichtung (2) auch mit dem Fernwärmenetz (FW) verbunden ist und das bei einer Entnahme von Warmwasser den Durchfluß von Warmwasser zur Heizkörpereinrichtung (2) drosselt oder sperrt.

3. Vorrichtung nach Anspruch 2, **dadurch gekennzeichnet, daß** das Prioritätsventil (14) ein Dreiwegeventil ist, das durch eine Membran (29) in Abhängigkeit vom Mengendurchfluß der Warmwasserentnahmeeinrichtung (WW) steuerbar ist.

4. Vorrichtung nach Anspruch 2, **dadurch gekennzeichnet, daß** das Verschlußstück (32) des ersten Ventils (14) mit einem Stellantrieb (28) verbunden ist, der bei einem Druckabfall in einer Sekundärleitung (8) des Wärmetauschers (1) eine Verstellung des Verschlußstücks (32) bewirkt.

5. Vorrichtung nach Anspruch 3, **dadurch gekennzeichnet, daß** das Verschlußstück (32) des ersten Ventils (14) mit der einen Seite der Membran (29) in einem Gehäuseteil (30) und die andere Seite der Membran (29) mit einer Sekundärleitung (8) des Wärmetauschers (1) verbunden ist.

6. Vorrichtung nach Anspruch 5, **dadurch gekennzeichnet, daß** die Sekundärleitung (8) die Kaltwasserzuleitung des Wärmetauschers (1) ist und die Membran (29) mit dem Verschlußstück (27) eines in der Kaltwasserzuleitung (8) liegenden dritten Ventils (26) verbunden ist.

7. Vorrichtung nach den Ansprüchen 4 und 6, **dadurch gekennzeichnet, daß** alle Ventile (14, 18, 26) ein gemeinsames Gehäuse aufweisen.

8. Vorrichtung nach Anspruch 7, **dadurch gekennzeichnet, daß** das erste Ventil (14) einen langgestreckten zylindrischen Gehäuseteil (41) aufweist, in dem das Verschlußstück des ersten Ventils (14) in Längsrichtung verstellbar ist und an dessen einem Ende der Gehäuseteil (30) des Stellantriebs (28) so angebracht ist, daß die Membran (29) koaxial zur Längsachse des Gehäuseteils (41) des ersten Ventils (14) angeordnet ist, daß der Gehäuseteil (30) des Stellantriebs (28) zugleich den Gehäuseteil des dritten Ventils (26) bildet, daß quer zum Gehäuseteil (41) des ersten Ventils (14) der Gehäuseteil (42) des zweiten Ventils (18) mit einem daran angebrachten Temperaturregler (22) zur Betätigung des zweiten Ventils (18) angebracht ist und der Temperaturfühler (24) des Temperaturreglers (22) in thermischer Verbindung mit dem Warmwasserausgang des Wärmetauschers (1) steht, und daß das zweite Ventil (18) den Eingang (15) des ersten Ventils (14) und dessen mit dem Wärmetauscher (1) verbundenen Ausgang (16) überbrückt.

9. Vorrichtung nach Anspruch 8, **dadurch gekennzeichnet, daß** an und quer zu den Gehäuseteilen (41, 42) des ersten Ventils (14) und des zweiten Ventils (18) ein Gehäuseteil (43) eines vierten Ventils (21) angebracht ist, das auf der mit dem Eingangsdruck verbundenen Eingangsseite des ersten und zweiten Ventils (14, 18) liegt und in Abhängigkeit von einer Druckdifferenz zwischen der Eingangsseite (15, 19) und der Ausgangsseite (16, 20) des ersten und zweiten Ventils (14, 18) steuerbar ist.

10. Vorrichtung nach Anspruch 9, **dadurch gekennzeichnet, daß** mit dem Gehäuseteil (43) des vierten Ventils (21) ein Gehäuseteil (44) eines Differenzdruckreglers (33) verbunden ist, der eine mit dem Verschlußstück (40) des vierten Ventils (21) verbundene Membran (37) aufweist, die auf der einen Seite dem Eingangsdruck und auf der anderen Seite dem Ausgangsdruck des ersten und zweiten Ventils (14, 18) ausgesetzt ist.

## Claims

1. Device (3) for connecting a heat exchanger (1) for a hot-water distributing device (WW) in an apartment and, occasionally, a radiator device (2) in the apartment, to a district heating system (FW), with a first valve (14) controlled in dependence of the volumetric flow of the hot-water distributing device (WW) and a second valve (18) controlled by the temperature of the tapped hot water, both valves being located between the district heating system (FW) and the primary side of the heat exchanger (1), whose secondary side (9) is connected with the hot-water distributing device, **characterised in that** the first valve (14) and the second valve (18) are connected in parallel.

2. Device according to claim 1, **characterised in that** when a radiator device (2) is installed, the first valve (14) is a priority valve, via which the radiator device (2) is also connected with the district heating system (FW) and which throttles or blocks the flow of how water to the radiator device (2) during a tapping of hot water.

3. Device according to claim 2, **characterised in that** the priority valve (14) is a three-way valve, which can be controlled through a diaphragm (29) in dependence of the volumetric flow of the hot-water distributing device (WW).

4. Device according to claim 2, **characterised in that** the closing member (32) of the first valve (14) is connected with an actuator (28), which causes a displacement of the closing member (32) in case of a pressure drop in a secondary pipe (8) of the heat exchanger (1).

5. Device according to claim 3, **characterised in that** the closing member (32) of the first valve (14) is connected with one side of the diaphragm (29) in a housing part (30) and the other side of the diaphragm (29 is connected with a secondary pipe (8) of the heat exchanger (1).

6. Device according to claim 5, **characterised in that** the secondary pipe (8) is the cold-water supply pipe to the heat exchanger (1) and the diaphragm (29) is connected with the closing member (27) of a third valve (26) located in the cold-water supply pipe (8).

7. Device according to the claims 4 and 6, **characterised in that** all valves (14, 18, 26) have a common housing.

8. Device according to claim 7, **characterised in that** the first valve (14) exhibits a longitudinally extending, cylindrical housing part (41), in which the closing member of the first valve (14) is adjustable in the longitudinal direction, and at whose one end the housing part (30) of the actuator (28) is located so that the diaphragm (29) is arranged to be coaxial to the longitudinal axis of the housing part (41) of the first valve (14), that the housing part (30) of the actuator (28) is at the same time the housing part of the third valve (26), that the housing part (42) of the second valve (18) with an attached temperature controller (22) for activating the second valve (18) is arranged to be transverse to the housing part (41) of the first valve (14), the temperature sensor (24) of the temperature controller (22) being in thermal connection with the hot-water outlet of the heat exchanger (1), and that the second valve (18) bridges the inlet (15) of the first valve (14) and its outlet (16), which is connected with the heat exchanger (1).

9. Device according to claim 8, **characterised in that** a housing part (43) of a fourth valve (21) is arranged on and transversely to the housing parts (41, 42) of the first valve (14) and the second valve (18), said. fourth valve (21) being located on the inlet side of the first and the second valves (14, 18) being connected with the inlet pressure, and being controllable in dependence of a pressure difference between the inlet side (15, 19) and the outlet side (16, 20) of the first and the second valves (14, 18).

10. Device according to claim 9, **characterised in that** a housing part (44) of a differential pressure controller (33) is connected with the housing part (43) of the fourth valve (21), said differential pressure controller (33) having a diaphragm (37), which is connected with the closing member (40) of the fourth valve (21), said diaphragm (37) being exposed on the one side to the inlet pressure and on the other side to the outlet pressure of the first and the second valves (14, 18).

## Revendications

1. Dispositif (3) destiné à raccorder un échangeur de chaleur (1) d'un dispositif domestique de prélèvement d'eau chaude (WW) et éventuellement d'un dispositif de corps de chauffe (2) domestique à un réseau de distribution de chaleur (FW) avec une première soupape (14) pilotée en fonction du débit quantitatif du dispositif de prélèvement d'eau chaude (WW) et une deuxième soupape (18) pilotée par la température de l'eau chaude prélevée, qui sont toutes les deux placées entre le réseau de distribution de chaleur (FW) et le côté primaire de l'échangeur de chaleur (1) dont le côté secondaire (9) est raccordé au dispositif de prélèvement d'eau chaude, **caractérisé en ce que** la première soupape (14) et la deuxième soupape (18) sont montées en parallèle.

2. Dispositif selon la revendication 1, **caractérisé en ce que**, en présence d'un dispositif de corps de chauffe (2), la première soupape (14) est une soupape prioritaire par l'intermédiaire de laquelle le dispositif de corps de chauffe (2) est également raccordé au réseau de distribution de chaleur (FW) et qui, en cas de prélèvement d'eau chaude, étrangle ou ferme le débit de l'eau chaude vers le dispositif de corps de chauffe (2).

3. Dispositif selon la revendication 2, **caractérisé en ce que** la soupape prioritaire (14) est une soupape à trois voies qui peut être pilotée via une membrane (29) en fonction du débit quantitatif du dispositif de prélèvement d'eau chaude (WW).

4. Dispositif selon la revendication 2, **caractérisé en ce que** l'obturateur (32) de la première soupape (14) est raccordé à un servomoteur (28) qui, en cas de chute de pression dans une conduite secondaire (8) de l'échangeur de chaleur (1), provoque un déplacement de l'obturateur (32).

5. Dispositif selon la revendication 3, **caractérisé en ce que** l'obturateur (32) de la première soupape (14) est raccordé à un côté de la membrane (29) dans une partie de carter (30) et à l'autre côté de la membrane (29) avec une conduite secondaire (8) de l'échangeur de chaleur (1).

6. Dispositif selon la revendication 5, **caractérisé en ce que** la conduite secondaire (8) est la conduite d'amenée d'eau froide de l'échangeur de chaleur (1) et la membrane (29) est raccordée à l'obturateur (27) d'une troisième soupape (26) placée dans la conduite d'amenée d'eau froide (8).

7. Dispositif selon les revendications 4 et 6, **caractérisé en ce que** toutes les soupapes (14, 18, 26) comprennent un carter commun.

8. Dispositif selon la revendication 7, **caractérisé en ce que** la première soupape (14) comporte une partie de carter (41) cylindrique allongée dans laquelle l'obturateur de la première soupape (14) est déplaçable dans le sens longitudinal et à une extrémité de laquelle la partie de carter (30) du servomoteur (28) est agencée de telle manière que la membrane (29) est placée coaxialement par rapport à l'axe longitudinal de la partie de carter (41) de la première soupape (14), que la partie de carter (30) du servomoteur (28) forme en même temps la partie de carter de la troisième soupape (26), que la partie de carter (42) de la deuxième soupape (18) est placée perpendiculairement à la partie de carter (41) de la première soupape (14) avec un thermostat (22) fixé dessus pour actionner la deuxième soupape (18) et la sonde thermique (24) du thermostat (22) est en communication thermique avec la sortie d'eau chaude de l'échangeur de chaleur (1) et que la deuxième soupape (18) court-circuite l'entrée (15) de la première soupape (14) et de la sortie (16) de celle-ci raccordée à l'échangeur de chaleur (1).

9. Dispositif selon la revendication 8, **caractérisé en ce qu'**une partie de carter (43) d'une quatrième soupape (21) est placée sur les et perpendiculairement aux parties de carter (41, 42) de la première soupape (14) et de la deuxième soupape (18), laquelle quatrième soupape (21) est placée sur le côté entrée de la première et de la deuxième soupape (14, 18) raccordé à la pression d'entrée et peut être pilotée en fonction d'une différence de pression entre le côté entrée (15, 19) et le côté sortie (16, 20) de la première et de la deuxième soupape (14, 18).

10. Dispositif selon la revendication 9, **caractérisé en ce qu'**une partie de carter (44) d'un régulateur de pression différentielle (33) est raccordée à la partie de carter (43) de la quatrième soupape (21), lequel régulateur (33) comporte une membrane (37) raccordée à l'obturateur (40) de la quatrième soupape (21), laquelle membrane (37) est soumise, d'un côté, à la pression d'entrée et, de l'autre côté, à la pression de sortie de la première et de la deuxième soupape (14, 18).
